Europäisches Patentamt

European Patent Office

Office européen des brevets

Publication number: **0 274 608**
**A1**

# EUROPEAN PATENT APPLICATION

Application number: 87116810.0

Int. Cl.⁴ **B01J 20/04**

Date of filing: 13.11.87

Priority: 14.11.86 JP 271190/86

Date of publication of application:
20.07.88 Bulletin 88/29

Designated Contracting States:
CH DE FR GB LI NL SE

Applicant: **KOKEN CO. LTD.**
**5-18 Shimoochiai 3-chome**
**Shinjuku-ku Tokyo(JP)**

Inventor: **Kawasaki, Tsutomu**
**3-15-5 Shimo-takaido**
**Suginami-ku Tokyo(JP)**
Inventor: **Kobayashi, Wataru**
**33-4, Midori-cho**
**Tsuruoka-shi Yamagata-ken(JP)**

Representative: **Blumbach Weser Bergen**
**Kramer Zwirner Hoffmann Patentanwälte**
**Radeckestrasse 43**
**D-8000 München 60(DE)**

## Adsorbent employing an apatite compound.

An adsorbent employing an apatitic compound is obtained on coating the surface of a carrier particle (a) having pressure collapsing resistance with an apatite compound (b). The adsorbent obtained in this manner may have a larger particle size so that is may be advantageously employed in a chromatographic system, above all, in a packed state in a large diameter large capacity column of such system. The adsorbent may be effective as the adsorbent for chromatography since it is substantially free from particle size fluctuations while being excellent in pressure collapse resistance.

EP 0 274 608 A1

## ABSORBENT EMPLOYING AN APATITE COMPOUND

## BACKGROUND OF THE INVENTION

### Field of the Invention

The present invention relates to an absorbent and more particularly to an adsorbent of an apatite compound.

### Description of the Prior Art

The apatite compounds belong to a hexagonal system $P6_3 m$ having the basic composition of the general formula $M_{10}(ZO_4)_6X_2$. They may occasionally be grasped as the compounds of the monoclinic system $P2_1 b$ which is double the above stated basic composition. Typical compounds of these are calcium phosphate hydroxyapatite $Ca_{10}(PO_4)_6(OH)_2$, wherein M = Ca, Z = P and X = OH, unit cell of hexagonal system, $a \wedge b = 120°$, $a \wedge c = b \wedge c = 90°$, $a_1 = b_1 = 9.42$ Å, $c_1 = 6.88$ Å; calcium phosphate fluoroapatite $(Ca_{10}(PO_4)_6F_2)$ wherein X = F; calcium phosphate chloroapatite $(Ca_{10}(PO_4)_6Cl_2)$ wherein X = Cl; and strontium phosphate hydroxyapatite $(Sr_{10}(PO_4)_6(OH)_2)$ wherein M = Sr.

The apatite compounds generally exhibit superior adsorptive properties. In the following, description is made by taking a specific example of hydroxyapatite , hereafter abbreviated to as HAp, a representative apatite compound.

The HAp particles exhibit superior properties in chromatographic separation or in substance separation or development when used as the absorbent packed or charged into a column or as a stationary phase agent in the column in column chromatography. Thus it is possible with the chromatography using these particles as the adsorbent packed in the column, or HAp chromatography, to realize high acuteness and precision separation and fractionation of substances having a minute difference in structure from one another which was difficult to achieve with the use of the prior-art adsorbents such as ion exchange resins, activated alumina or calcium carbonates. These substances may include biological macromolecule materials having a molecular weight of $10^4$ to $10^9$ Dalton, such as, for example, proteins including immunoglobulin, interferon or enzymes, or nucleic acids such as RNA, DNA or plasmids or viruses. It is presently used as means indispensable for high purity separation and refining of a variety of ultimate useful substances obtained by gene recombination, cell fusion or cell culture en masse.

The present inventors have found that the HAp particles exhibit the properties of efficiently adsorbing and eliminating $\beta_2$-microglobulin ($\beta$-MG) as the toxic material that is not substantially removed on dialysis but remains in the blood of a patient suffering from renal insufficiency. Based on this finding, there has been developed and proposed an adsorbent and remover for $\beta_2$-MG containing the HAp particles as the effective ingredients (Japanese Patent Application No. 158070/1986).

The HAp particles may be classified into the following various types:

### (1) Type A

The type A material is the HAp crystal particles obtained by the Tiselius method proposed by A. Tiselius, S. Hjertén and Ö. Levin in Arch. Biochem. Biophys., 65, 132 (1956). These HAp particles may be produced by having a suitable alkali act on an aqueous suspension of crystal particles of Brushite $(CaHPO_4•2H_2O)$ used as the starting material. The particles of the type A are substantially monocrystal plate-or flake-like particles of a larger crystal size with a thickness of 1 to 3 microns, a mean diameter along the long axis of the order of tens of microns and with a shape which is substantially the replica of the shape of the Brushite crystal particles used as the starting material.

### (2) Type B

The type B material is the secondary particles composed of aggregated or flocculated primary particles that are in the form of fine HAp crystals. In general, the B type particles are produced by the following method. An aqueous solution or suspension of calcium salts such as $Ca(OH)_2$, $CaCl_2$, $Ca(NO_3)_2$ or $Ca(CH_3COO)_2$ are mixed under a basic condition with an aqueous solution of $PO_4$ salts such as $NH_4H_2PO_4$, $(NH_4)_2HPO_4$ or $H_3PO_4$. In such a manner, fine primary HAp crystal particles are produced with a particle size of usually not larger than 0.1 micron. The liquid suspension of these primary crystals are spray dried to produce substantially spherical secondary particles with a diameter of 1 to 10 microns through desiccation and aggregation of the primary HAp particles.

(3) Type C

The type C material is the substantially monocrystal HAp particles produced by the method disclosed in our copending Japanese Patent Application No. 18868,1986. Thus the starting Brushite crystal particles are first heated to a range of temperatures of not lower than the dehydration and phase transition temperature and not higher than the decomposition temperature so as to be turned on dehydration and phase transition into crystal particles of monetite $CaHPO_4$, these monetite crystal particles being then acted upon by a suitable alkali to produce substantially monocrystal HAp particles. The resulting HAp particles are produced in such a manner that the relatively large-sized plate-or flake-like starting Brushite crystal particles are crushed spontaneously within the crystal plane to smaller pieces having the size of the order of several microns under the force of internal strain produced on phase transition of the crystals into monetite by dehydration and phase transition. Thus, these C type particles are uniform in their entirety in size and shape and are 1 to 3 microns in thickness and several microns in diameter. Thus the C type particles are subject to lesser fluctuations in size and shape than the aforementioned A-type large-sized plate-or flake-like HAp particles having the size and shape that are the replica of the starting Brushite crystal particles. Hence, the C type particles are more desirable than the A type particles when used as the adsorbent used for chromatography.

The C type material may also be produced by using, as the starting material, monetite crystal particles previously produced by dehydration and phase transition of the Brushite crystal particles; existing monetite crystal particles; or the particles of the intermediate product obtained in the course of processing the Brushite to the stage of monetite and that are uniform as a whole in size and shape from the outset or subsequently processed so as to be uniform in size and shape, and causing an alkali to act on the starting material.

(4) Type-D

The type D material is the sintered HAp particles in accordance with our preceding proposal (Japanese Patent Application No. 61-49699). This material is obtained by further heating and sintering the aggregated or flocculated secondary particles of the type B at a temperature not lower than about 300°C and not higher than the decomposition temperature. With the type D materia,l, the primary particles are strongly bonded together, so that the material has an excellent pressure collapsing resistance.

When the chromatographic system is a laboratory type small-scale device and the column used in the chromatograph is of the relatively small capacity with the diameter of the order of several to tens of millimeters, it is desirable that, for executing the chromatographic operation with higher accuracy, the HAp particles used as the absorbent packed in the column be of the order of 1 to 10 microns in particle size. Therefore, any of the aforementioned A to D type HAp particles may be used effectively as the absorbent packed in the column. Above all, it is advisable to use the HAp particles of the types C and D since they are substantially uniform in particle size with a narrower range of particle size fluctuations, while being resistant to pressure collapsing, so that it is possible with these particles to execute the operations of the chromatographic separation with higher accuracy and efficiency with improved stability and durability.

On the other hand, when the chromatographic system is designed as the industrial type large scale fractionating system using a large diameter large capacity column of, for example, 600 mm or more in diameter, it is occasionally desired that, for assuring a high-speed chromatographic operation by reducing the resistance to circulation of the fluid introduced into the column, the HAp particles packed as the absorbent into the column by a larger particle size up to 100 microns or more.

When preparing a chromatographic column for separation of cells several microns in size or organella up to 0,1 micron in size, it is necessary that the HAp particles packed in the column as the adsorbent be much larger in size than the above size of the cells or organella. Thus it is necessary that the cells or organella may pass through the filter but the HAp particles as the filler or packing material in the column are unable to pass through the filter.

In such case, none of the A to D type HAp particles is adequate, at least as regards the particle size. The same may be said of the particles of other apatite compounds, such as fluoroapatite or chloroapatite. Thus a demand exists for developing the particles of the apatite compounds that are typified by HAp and that are

　　　a) of a larger particle size as desired,

　　　b) substantially uniform in particle size with a narrower range of particle size fluctuations,

　　　c) excellent in pressure collapsing resistance, and

　　　d) producible at reduced costs.

## SUMMARY OF THE INVENTION

It is therefore an object of the present invention to provide an adsorbent employing particles of apatite compounds having the desired particle size with little fluctuations and excellent resistance to pressure collapsing.

In accordance with the present invention, there is provided an absorbent making use of an apatite compound comprising a carrier particle having pressure collapsing resistance and a coating layer formed of the apatite compound and securely affixed to said carrier particle so as to cover the particle surface.

## BRIEF DESCRIPTION OF THE DRAWINGS

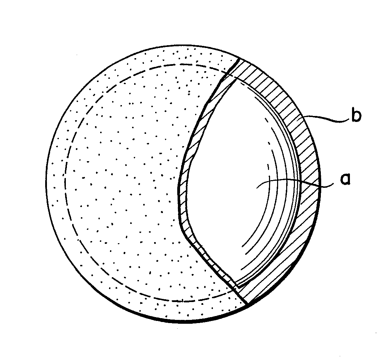

The objects and features of the present invention will become more apparent from the consideration of the following detailed description taken in conjunction with the accompanying drawing in which:

The sole figure is an enlarged diagrammatic view with a sectional view partly showing an adsorbent particle of the present invention comprising a spherical carrier particle and a coating layer of an apatite compound covering and being securely affixed to the surface of the carrier particle.

## DESCRIPTION OF THE PREFERRED EMBODIMENTS

The above described coated adsorbent particle has the shape and the size substantially corresponding to those of the carrier particle employed as the nucleus. Therefore, by using the carrier particle of the desired size and shape, an adsorbent particle of the apatite compound having the size and the shape substantially corresponding thereto, such as the spherical shape and the larger particle size of 50 or 100 microns or larger, for example, may be produced as desired.

By using carrier particles each having substantially uniform size and shape, adsorbent particles having the uniform size and shape may be produced.

Because of the pressure collapsing resistance of the carrier particles as nuclei, the absorbent particles are not collapsed under the pressure when packed in large quantities in a large capacity column, so that the prescribed fluid circulatability may be stably maintained for prolonged time throughout the inside of the column.

When preparing the absorbent particles, only the coating layer on the carrier particle surface need be formed of the apatite compound as the effective ingredient so that the relative volume of the apatite compound based on the total volume inclusive of that of the carrier particle is reduced. The result is the markedly reduced quantity of the apatite compound as the effective ingredient and reduced production costs when the adsorbent particles are produced in large quantities.

In the figure, there is shown an absorbent particle comprised of a spherical carrier particle a and a coating layer of the apatite compound b covering and secured to the surface of the particle a.

The carrier particle a is formed of a material having a pressure collapse resistance, such as glass, ceramic, metal or resin, which is processed and fabricated to a particle of the desired size and shape. Any natural particulate material having the pressure collapsing resistance, such as sand particles, iron sand or pebble, classified according to the size and shape, may also be employed.

The apatite materials used in the coating layer b may include hydroxyapatite, fluoroapatite and cloroapatite.

The coating layer b of the apatitic compound may be formed on the surface of the carrier particle a by any of the following various methods.

## EXAMPLE 1

A liquid suspension of a suitable concentration of fine particles of the apatitic compound having the particle size of the order of 0.1 micron, for example, is sprayed onto the carrier particle having the desired shape and size, such as the size of 50 or 100 microns, for adhesion thereto. The carrier particle thus processed is then dried. In this manner, fine particles of the apatitic compound are aggregated and fastened to the surface of the carrier particle a to form the coating layer b.

## EXAMPLE 2

In the above example 1, for augmenting the force of securely affixing the coating layer b onto the surface of the carrier particle a and the force of aggregating and solidifying the fine particles of the apatite material of the coating layer b to one another, a suitable binder may be present in a dissolved state at a suitable concentration in the liquid suspension of the fine particles of the apatite compound to be sprayed onto the carrier particle a.

## EXAMPLE 3

The carrier particle a having the coating layer b of the fine particles of the apatite compound aggregated and securely affixed thereto in accordance with the Examples 1 and 2, is further sintered in a heating oven at a suitable temperature. In this manner, the coating layer b is securely baked and bonded to the surface of the carrier particle a, while the fine particles of the apatitic compound forming the coating layer b are also securely baked and bonded to one another to improve the mechanical strength of the coating layer.

## EXAMPLE 4

An adhesive solution having a suitable concentration is applied on the surface of the carrier particle a by spraying or dipping for wetting the carrier particle surface with the adhesive solution. The fine particles of the apatitic compound in the dried state are then sprinkled on the thus wetted surface so as to be affixed in situ and dried. The so-coated particle is then sintered as in Example 3.

The fine primary crystal particles obtained by the chemical reaction between the aforementioned B-type Ca and $PO_4$ salts may be utilized as the fine particles of the apatite compound. In addition, the fine particle size fractions obtained upon classification of the A and D type particles, or the fine particles obtained by processing the large size particles after crushing and pulverization, may also be utilized.

The coating layer b of the apatite compound formed on the surface of the carrier particle a may be of a reduced thickness, such that the thickness of the coating layer not larger than one-tenth the particle size of the carrier particle a, may safely be employed.

It is not essential that the carrier particle a be in a spherical form. Thus it may be cubic, parallelepipedic, columnar, conical or pyramidic plate-, flake-, bar-like or in any other form desired.

As the carrier particles a, small spherical glass beads having the mean particle size of 100 microns within the allowable range of fluctuations in the particle size, were employed. The crystal particles of hydroxyapatite (HAp) that are fine and substantially free of lattice defects, that is, stoichiometric, with the HAp crystal particle size being of the order of 1 micron, were suspended in water to a suspension concentration of 1.65%, the resulting suspension being sprayed on to the glass beads and dried for forming thin coating layers b aggregated and securely affixed to the outer surfaces of the respective spherical glass beads to a thickness of the order of 1 to 2 microns. The spherical glass beads a having the coating layer b thus afffixed thereto were placed in an electrical oven so as to be heated at 650°C for 30 minutes. In this manner, the coating layer b was baked and firmly bonded to the surface of each of the spherical glass beads as the carrier particles, while the fine HAp particles of the coating layer b were firmly bonded to one another. As a result thereof, the coated type adsorbent particle of a larger diameter would be obtained easily.

It is seen from the foregoing that the present invention provides an absorbent of the apatite compound having the desired larger and uniform particle size, pressure collapse resistance and economic merits in keeping with the demand for the adsorbent packed or charged into the tower of the large scale chromatographic system.

While the present invention has been described with reference to the particular illustrative embodiments thereof, it is not to be restricted by those embodiments but only by the appended claims. It is to be appreciated that those skilled in the art can change or modify the embodiments without departing from the scope and spirit of the present invention.

## Claims

1. An adsorbent employing an apatite compound,
CHARACTERIZED IN THAT
said adsorbent comprises a carrier particle (a) having a pressure collapsing resistance, and
a coating layer (b) formed of said apatite compound and securely affixed to said carrier particle (a) so as to cover the surface of the carrier particle (a).

2. An adsorbent in accordance with claim 1,
CHARACTERIZED IN THAT
said absorbent is used for chromatography.

3. An adsorbent in accordance with claim 2,
CHARACTERIZED IN THAT
said carrier particle (a) is of a larger particle size.

4. An adsorbent in accordance with claim 1,
CHARACTERIZED IN THAT
said carrier particle (a) is formed of at least one of glass, ceramics, metal and resin.

5. An adsorbent in accordance with claim 1,
CHARACTERIZED IN THAT
said apatite compound is formed of at least one of calcium phosphate hydroxyapatite, calcium phosphate fluoroapatite, calcium phosphate chloroapatite and strontium phosphate hydroxyapatite.

6. An adsorbent in accordance with claim 2,
CHARACTERIZED IN THAT
said carrier particle (a) is of spherical form.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | DE-A-3 722 102 (ASAHI) <br> * Page 1, lines 1-25 * <br> --- | 1-6 | B 01 J 20/04 |
| P,A | CHEMICAL ABSTRACTS, vol. 107, 21st September 1987, abstract no. 101608n, Columbus, Ohio, US; & JP-A-62 91 479 (NATIONAL RESEARCH INSTITUTE FOR METALS) 25-04-1987 <br> --- | 1 | |
| A | US-A-3 379 541 (TUVELL) <br> * Column 5, line 56 - column 6, line 63 * <br> --- | 1,4 | |
| A | JOURNAL OF LIQUID CHROMATOGRAPHY, vol. 9, no. 16, 1986, pages 3543-3557, Marcel Dekker, Inc.; T. KADOYA et al.: "A new spherical hydroxyapatite for high performance liquid chromatography of proteins" <br> * Pages 3543-3550 * <br> --- | 2,5 | |
| A | PATENT ABSTRACTS OF JAPAN, vol. 10, no. 53 (P-433)[2110], 4th March 1986; & JP-A-60 198 458 (KOUKEN K.K.) 07-10-1985 <br> * Abstract * <br> ----- | 2,5 | **TECHNICAL FIELDS SEARCHED (Int. Cl.4)** <br><br> B 01 J |

The present search report has been drawn up for all claims

| Place of search | Date of completion of the search | Examiner |
|---|---|---|
| THE HAGUE | 23-03-1988 | WENDLING J.P. |